# EUROPÄISCHE PATENTANMELDUNG

(11) **EP 2 664 844 A1**
(43) Veröffentlichungstag der Anmeldung: **20.11.2013**
(21) Anmeldenummer: 12168035.9
(22) Anmeldetag: 15.05.2012
(51) Int. Cl.: F21V 15/04, F21S 8/10, C21D 1/30, C21D 9/00, F27B 9/02

(54) **Verfahren und Vorrichtung zum Tempern von Fahrzeugleuchten**

(71) Anmelder: Odelo GmbH, 71409 Schwaikheim (DE)
(72) Erfinder: Ricking, Thorsten, 71364 Winnenden (DE); Kutterer, Achim, 70197 Stuttgart (DE)
(74) Vertreter: Benninger, Johannes

(57) **Zusammenfassung**

Es werden ein Verfahren und eine Vorrichtung (01) zum Tempern von Fahrzeugleuchten mit einem von einer Lichtscheibe und einem Leuchtengehäuse umschlossenen, zumindest ein Leuchtmittel mit wenigstens einer Lichtquelle beherbergenden Leuchteninnenraum beschrieben.

Das Verfahren sieht die Verfahrensschritte:
- Einbringen (II) der Fahrzeugleuchten (02) in eine Transportstrecke (03) unter Aneinanderreihung der Fahrzeugleuchten (02),
- Transport (III) der Fahrzeugleuchten (02) entlang der Transportstrecke (03),
- Tempern (IV) der Fahrzeugleuchten (02) vermittels einer:
- Aufheizphase (V) unter Aussetzen der Fahrzeugleuchten (02) einer IR-Strahlung während deren Transports über eine vorgegebene erste Transportstreckenpartie (09) hinweg,
und einer
- Temperaturhaltephase (VI), wobei die weiter transportierten Fahrzeugleuchten (02) im Anschluss an die Aufheizphase (V) nacheinander den Einwirkungsbereichs der IR-Strahlung verlassen und (02) während deren Transports über eine vorgegebene zweite Transportstreckenpartie (11) hinweg Warmluft ausgesetzt sind, sowie
- Entnahme (VII) der getemperten Fahrzeugleuchten (02).

Die Vorrichtung umfasst eine entlang einer Transportstrecke (03) verlaufende, angetriebene Transporteinrichtung (04).

## Beschreibung

Die Erfindung betrifft ein Verfahren gemäß dem Oberbegriff des Anspruchs 1 sowie eine Vorrichtung gemäß dem Oberbegriff des Anspruchs 9.

Fahrzeugleuchten im Allgemeinen und Kraftfahrzeugheckleuchten im Speziellen müssen einer Vielzahl von Einwirkungen, wie etwa Umwelteinflüssen über die gesamte Lebensdauer eines Fahrzeugs widerstehen. Entsprechend hoch sind die Qualitätsanforderungen, vor allem im Automobilbereich.

Eine Fahrzeugleuchte umfasst im Wesentlichen einen von einem Leuchtengehäuse und einer Lichtscheibe umschlossenen Leuchteninnenraum und mindestens ein darin beherbergtes Leuchtmittel mit zumindest einer Lichtquelle, sowie gegebenenfalls zugehörige Elektronikbauteile für wenigstens eine Lichtfunktion der Kraftfahrzeugleuchte. In dem Leuchteninnenraum kann mindestens ein von außerhalb des Leuchteninnenraums durch die Lichtscheibe hindurch gesehen hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuse selbst, beispielsweise vermittels einer zumindest teilweisen reflektierenden Beschichtung, gebildet sein.

Wenigstens einer Lichtquelle des Leuchtmittels können ein oder mehrere Optikelemente, wie etwa mindestens eine Linse, mindestens ein Rinnenkonzentrator, z.B. mindestens eine Parabolrinne (CPC; Compound Parabolic Concentrator) oder dergleichen zur Ausformung einer definierten Abstrahlcharakteristik zugeordnet sein.

Die Lichtscheibe ist durch eine transparente Abdeckung gebildet, welche den Leuchteninnenraum sowie die von diesem beherbergten Bauteile gegen Witterungseinflüsse schützt.

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel und/oder dessen mindestens eine Lichtquelle zu kaschieren. Das Leuchtengehäuse bzw. der Leuchteninnenraum kann in mehrere Leuchtenkammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere oder alle Leuchtenkammern gleiche oder jede Leuchtenkammer eine andere Lichtfunktionen erfüllen kann.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Bei einer Lichtfunktion handelt es sich dabei um eine durch Abstrahlung von Licht einer bestimmten Farbe in einer bestimmten Helligkeit und Richtung verwirklichte, zur Erfüllung einer Aufgabe vorgesehene Funktion der Fahrzeugleuchte. Lichtfunktionen sind beispielsweise bei einer Ausgestaltung als Scheinwerfer eine die Fahrbahn ausleuchtende Funktion, oder bei einer Ausgestaltung als Signalleuchte speziell bei Kraftfahrzeugen eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer auch als Schlusslichtfunktion bezeichneten Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte. Beispiele für Fahrzeugleuchten im Automobilbereich sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Ein Leuchtmittel für wenigstens eine Lichtfunktion umfasst zumindest wenigstens eine Lichtquelle, beispielsweise mindestens eine Glühlampe oder mindestens eine Gasentladungslampe oder mindestens eine Leuchtdiode sowie gegebenenfalls Kombinationen hiervon.

Beispielsweise kommen als Lichtquellen von Leuchtmitteln für Fahrzeugleuchten vermehrt Leuchtdioden zum Einsatz. Diese bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Fahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Mit anderen Worten weisen LEDs bei gleicher Lichtstärke einen im Vergleich zu anderen Lichtquellen geringeren Stromverbrauch auf. Hierdurch kann bei einer Verwendung einer oder mehrerer LEDS als Lichtquelle eines Leuchtmittels beispielsweise in einer Kraftfahrzeugleuchte die Belastung eines zur Stromversorgung vorgesehenen Bordnetzes eines Kraftfahrzeugs verringert werden, einhergehend mit Einsparungen beim Energieverbrauch des Kraftfahrzeugs. Ferner weisen LEDs eine weit höhere Lebensdauer auf, als andere, zur Anwendung in einer Fahrzeugleuchte in Frage kommende Lichtquellen. Durch die längere Lebensdauer wird unter Anderem durch die geringere Ausfallquote die Betriebssicherheit und damit einhergehend die Qualität der Fahrzeugleuchte erhöht.

Zum Betrieb von LEDs als Lichtquellen für ein Leuchtmittel beispielsweise einer Kraftfahrzeugleuchte können eine oder mehrere mehr oder minder komplexe elektronische Steuerschaltungen vorgesehen sein, die beispielsweise auf einem oder mehreren Leuchtmittelträgern des Leuchtmittels angeordnet und in dem Leuchteninnenraum beherbergt sein können.

Ein einfaches Beispiel für eine elektronische Steuerschaltung betrifft die Angleichung unterschiedlicher Helligkeiten einzelner LEDs oder von LED-Strängen innerhalb einer Gruppe gemeinsam betriebener, auf einem oder mehreren Leuchtmittelträgern angeordneter LEDs. Eine solche elektronische Steuerschaltung besteht aus mindestens einem oder mehreren Vorwiderständen zur Anpassung der Vorwärtsspannung der LEDs an das Bordnetz. Beispielsweise ist bekannt, die LEDs im so genannten Binning nach Vorwärtsspannung und Intensität zu sortieren. Um Unterschiede zwischen mehreren LED-Strängen auszugleichen, die jeweils aus in Reihe geschalteten LEDs gleicher Vorwärtsspannung und Intensität bestehen, und um eine homogene Helligkeitsverteilung der benachbarten LED-Stränge aus LEDs mit unterschiedlicher Vorwärtsspannung und Intensität zu erhalten, wird zumindest jeder LED-Strang mit einem anderen Vorwiderstand versehen.

LEDs bedürfen darüber hinaus beim Einsatz als Lichtquelle insbesondere in Kraftfahrzeugleuchten oft einer separaten Ausfallerkennung. Dies ist bedingt durch die geringe Leistungsaufnahme von LEDs im Allgemeinen. Beispielsweise ist ein in einem Kraftfahrzeug untergebrachtes Steuergerät nicht in der Lage, eine dem Ausfall einer oder weniger LEDs entsprechende Änderung der Leistungsentnahme aus dem Bordnetz zu erkennen, da eine hieraus resultierende Bordnetzspannungsänderung unterhalb der im normalen Betrieb eines Kraftfahrzeugs auftretenden Bordnetzspannungsschwankung liegt. Eine beispielsweise in der Kraftfahrzeugleuchte untergebrachte elektronische Schaltungsanordnung zur Ausfallerkennung erfasst den Ausfall einer oder mehrerer Leuchtdioden in der Kraftfahrzeugleuchte z.B. mittels eines oder mehrerer Komparatoren und teilt dies dem Steuergerät mit. Diese elektronische Schaltungsanordnung zur Ausfallerkennung kann durch eine beispielsweise auf dem Leuchtmittelträger aufgebrachte elektronische Steuerschaltung verwirklicht sein.

Darüber hinaus können LEDs weiterer elektronischer Steuerschaltungen bedürfen. Beispiele hierfür sind elektronische Steuerschaltungen:
- zur Regelung und/oder Steuerung der Helligkeit bzw. Leuchtkraft der LEDs, beispielsweise durch eine pulsweitenmodulierte Taktung der Stromversorgung für einen außerhalb des für das menschliche Auge wahrnehmbaren Bereichs gepulsten Betrieb,
- zur Kompensation oder Vermeidung elektromagnetischer Störungen, beispielsweise aufgebaut aus Kondensatoren und/oder Ferriten,
- zum Schutz der LEDs z.B. vor einer Überspannung des Bordnetzes oder vor fehlerhafter Polung, beispielsweise umfassend eine oder mehrere Zenerdioden,

Zusammengefasst muss für fast alle LED-Anwendungen eine mehr oder minder umfangreiche, für die speziellen LEDs ausgelegte elektronische Steuerschaltung z.B. auf den mindestens einen Leuchtmittelträger aufgebracht werden. Die elektronische Steuerschaltung umfasst im einfachsten Fall einen Vorwiderstand und eine Schutzdiode, kann aber je nach Anwendung auch wesentlich mehr Elektronikbauteile enthalten, wie z.B. Mikrokontroller bzw. Kontroller, Komparatoren, Transistoren, Schutzdioden, elektrische Widerstände z.B. als Vorwiderstand, Kondensatoren, Ferrite, etc.

Eine an Fahrzeugleuchten und vor allem an Kraftfahrzeugheckleuchten im Automobilbereich gestellte Qualitätsanforderung sieht eine Beständigkeit vor allem der Lichtscheibe gegen ein Ethanol-Wasser-Gemisch vor, ohne dass eine Rissbildung in der Lichtscheibe auftritt.

Neben anderen Qualitätsanforderungen kann diese nur erfüllt werden, wenn die, im Herstellprozess der Fahrzeugleuchte induzierten Spannungen in einem Temperprozess relaxiert werden.

Zur Spannungsrelaxation sind eine erforderliche Temperatur und Einwirkzeit des Temperprozesses zu ermitteln, der sich in eine Aufheizphase und eine Temperaturhaltephase gliedert.

Dabei muss der Temperprozess möglichst kurz und möglichst prozesssicher gestaltet sein, da beispielsweise die Rückstrahlerwerte von Fahrzeugleuchten, was insbesondere bei Kraftfahrzeugheckleuchten relevant ist, unter zu langem und zu hohem Temperatureinfluss abnehmen. Auch die aufgrund ihrer herausragenden Eigenschaften vermehrt als Lichtquellen in Fahrzeugleuchten verwendete LEDs weisen mit zunehmender Temperatur und Einwirkzeit, während der sie einer hohen Temperatur ausgesetzt sind, eine abnehmende Lebensdauer auf. Ebenso verhält es sich mit vielen der zum Betrieb von LEDs als Lichtquellen vor allem in Kraftfahrzeugleuchten benötigten und zunehmend ebenfalls in der Fahrzeugleuchte untergebrachten Elektronikbauteilen.

Ferner sind Randbedingungen für die Entwicklung von Temperanlagen einzuhalten, welche sich neben der Erfüllung des Temperprozesses und der Berücksichtigung der Rückstrahlerabnahme an:
- Anlagenfläche,
- Flexibilität im Bezug beispielsweise auf die Möglichkeit einer variablen Verwendung der Anlage oder eine variable Gestaltung eines Produktionsablaufs beispielsweise durch eine Verschiebbarkeit der Temperanlage,
- Komplexität bzw. Einfachheit der Prozessführung im Produktionsablauf,
- Flexibilität der Temperanlage im Bezug auf deren Verwendbarkeit bzw. Nutzung beispielsweise für Folgeprojekte, und
- Anlagenkosten
orientieren.

Ein erstrebenswertes Ziel ist daher ein Temperprozess mit einer möglichst kurzen, aber zur Erfüllung der Qualitätsanforderungen wirkungsvollen Einwirkzeit, der mit einer möglichst kompakt aufgebauten Temperanlage mit einfacher Prozessführung verwirklicht werden kann.

Zum Stand der Technik gehören drei unterschiedliche Temperprozesse:
- Batchtemperprozesse: Hier werden die Fahrzeugleuchten in Transportverpackungen oder auf Transportsystemen, wie beispielsweise Paletten, lagernd in großen Ofensystemen über eine Einwirkzeit von mehreren Stunden der Tempertemperatur ausgesetzt. Die Prozessführung sieht chargenweise das Einbringen der Fahrzeugleuchten in die Ofensysteme vor, das stationäre Verweilen bis zum Ende des Temperprozesses in den Ofensystemen sowie die Entnahme am Ende des Temperprozesses. Nachteilig hieran ist der hohe Energieverlust, der sich durch das Aufheizen und Abkühlen der Ofensysteme zu deren Be- und Entladung einstellt, sowie der damit verbundene Transportaufwand und die lange Einwirkzeit.
- Inline-Warmluftprozesse: Hier werden die Fahrzeugleuchten vermittels einer Förderanlage durch einen als Temperkammer dienenden, beispielsweise als Durchlaufofen ausgeführten Warmluftofen transportiert und getempert. Bei der Förderanlage kann es sich beispielsweise um einen Band-, Rollen- oder Kettenförderer handeln. Die Förderanlage ist dabei vorzugsweise endlos umlaufend ausgebildet und arbeitet bevorzugt kontinuierlich oder getaktet. Dementsprechend ist die Prozessführung dabei vorzugsweise kontinuierlich oder getaktet. Die Prozessführung kann durch eine annähernd beliebige Anordnung von Förderanlagen bewerkstelligt sowie durch annähernd beliebige mögliche Bahnführungen der Förderanlagen in Linie mit dem oder im Produktionsablauf untergebracht werden. Bekannte Ausführungsbeispiele von Förderanlagen sind Bandförderer, Gliederbandförderer, Kettenförderer und Rollenförderer um nur einige zu nennen. Die Bahnführung kann eben, gerade, gekrümmt sowie Höhendifferenzen überbrückend ausgestaltet sein. Industrielle Anlagen werden meist als Paternoster- oder Linearsystem ausgeführt und werden in Linie im Produktionsablauf betrieben. Bei den Paternostersystemen verlaufen die Förderanlagen im Wesentlichen vertikal. Bei den Linearsystemen hingegen horizontal. Durch die direkte Temperatureinwirkung auf die einzelnen Fahrzeugleuchten und die dadurch höher anzusetzende Tempertemperatur kann die Einwirkzeit im Vergleich zu Batchtemperprozessen reduziert werden. Gleichzeitig erfordern Inline-Warmluftprozesse eine höhere Temperaturgenauigkeit und Prozessstabilität im Vergleich zu den Öfen von Batchtemperprozessen vor dem Hintergrund der Rückstrahlerabnahme bei erhöhter Temperatureinwirkung. Typische Einwirkzeiten liegen bei ca. 20 Minuten. Die zur Durchführung von Inline-Warmluftprozessen benötigten Temperanlagen bedingen auf Grund der erforderlichen Einwirkzeit eine relativ großen Anlagenaufbau. So weisen beispielsweise Paternostersysteme Bauhöhen von 5 m und mehr auf. Linearsysteme weisen Baulängen von 7 m und mehr auf. Bedingt durch im Produktionsablauf auf den Temperprozess folgende Bearbeitungs- und Prüfschritte, wie mechanische Bearbeitungen oder Inline-Messsysteme müssen die Fahrzeugleuchten in aktiv gekühlten Kammern mit mindestens gleichem Volumen wie dem der Temperkammer abgekühlt werden.
- IR (Infrarot) -Temperpozesse: Hier werden die Fahrzeugleuchten vermittels einer Förderanlage mit spezifischen Fahrzeugleuchtenträgern durch ein kurzwelliges IR-Bestrahlungsfeld transportiert. Vorteil der Strahlungserwärmung ist eine schnellere Erwärmung der Fahrzeugleuchten und deren zu tempernder Bauteile, insbesondere deren Lichtscheiben, im Vergleich zur konvektiven Erwärmung der beiden erstgenannten Prozesse. Dadurch reduziert sich der Anlagenaufbau eines Linearsystems auf eine Länge von etwa 70% bis 75% im Vergleich zu einem Inline-Warmluftprozess. Ebenso vorteilhaft ist die geringere Notwendigkeit einer aktiven Abkühlung, da im IR-Temperprozess im Wesentlichen die Erwärmung nur im Bereich der Lichtscheibe erfolgt, und keine vollständige Durchwärmung der anderen Bauteile einer Fahrzeugleuchte wie in einem Warmluftofen bei einem Batchtemperprozess oder einem Inline-Temperprozess stattfindet. Nachteile von IR-Temperprozessen sind eine aufwendigere Einstellung der Temperaturhaltephase sowie komplexe Anlagenfunktionen im Falle von Störungen bzw. Produktionsunterbrechungen.

Durch DE 35 38 652 A1 ist ein Trocknungsprozess in einem auch als Conveyor-Ofen bezeichneter Durchlaufofen bekannt, der sowohl mit Warmluft als auch mit Infrarot beheizt werden kann.

Durch DE 38 08 073 C2 ist in Verbindung mit einem Reflow-Lötprozess angeraten, von einer Kombination von IR-Strahlung und Warmluft abzusehen.

Zusammengefasst ist kein Temperprozess bekannt, dem im Sinne des zuvor formulierten erstrebenswerten Ziels ein zufrieden stellendes Verfahren zum Tempern von Fahrzeugleuchten und eine zufrieden stellende Vorrichtung im Sinne einer Temperanlage zur Durchführung eines solchen Verfahrens zu Grunde liegt.

Der Erfindung liegt die Aufgabe zugrunde, ein Verfahren und eine Vorrichtung zum Tempern von Fahrzeugleuchten zu entwickeln.

Die Aufgabe wird durch die Merkmale der unabhängigen Ansprüche gelöst.

Ein erster Gegenstand der Erfindung betrifft demnach ein Verfahren zum Tempern von Fahrzeugleuchten mit einem von einer Lichtscheibe und einem Leuchtengehäuse umschlossenen, zumindest ein Leuchtmittel mit wenigstens einer Lichtquelle beherbergenden Leuchteninnenraum, umfassend eine Aufheizphase und eine Temperaturhaltephase, mit den Verfahrensschritten:
- Zufuhr von Fahrzeugleuchten beispielsweise zu einer vorzugsweise endlos umlaufend ausgebildeten und bevorzugt kontinuierlich oder getaktet arbeitenden, eine Transportstrecke beschreibenden Transporteinrichtung,
- gegebenenfalls Vereinzelung der Fahrzeugleuchten und
- Aneinanderreihung der Fahrzeugleuchten nacheinander auf der Transportstrecke in einer oder mehreren nebeneinander verlaufenden Reihen,
- vorzugsweise kontinuierlicher Transport der aneinandergereihten Fahrzeugleuchten, sowie
- Tempern der entlang der Transportstrecke transportierten Fahrzeugleuchten vermittels einer:
   - Aufheizphase unter Aussetzen der transportierten Fahrzeugleuchten einer IR-Strahlung während deren Transports über eine vorgegebene erste Transportstreckenpartie hinweg, wobei die Länge der ersten Transportstreckenpartie von einer am Ende der Aufheizphase zu erreichenden Haltetemperatur, der Transportgeschwindigkeit und dem Strahlungsfluss der IR-Strahlung entlang der ersten Transportstreckenpartie sowie dem Absorptionsgrad der Lichtscheiben für die IR-Strahlung abhängig ist,
      und einer
   - Temperaturhaltephase im Anschluss an die Aufheizphase, wobei die im Anschluss an die Aufheizphase weiter transportierten Fahrzeugleuchten nacheinander den Einwirkungsbereichs der IR-Strahlung verlassen und über eine vorgegebene zweite Transportstreckenpartie hinweg Warmluft ausgesetzt werden, wobei die Länge der zweiten Transportstreckenpartie von einer zur Relaxation der Lichtscheiben erforderlichen Einwirkzeit und der Transportgeschwindigkeit sowie dem Wärmeübergang von der Warmluft auf die Lichtscheiben abhängig ist,
      und
- Entnahme der getemperten Fahrzeugleuchten aus der Transportstrecke.

Beim Übergang von der Aufheizphase zur Temperaturhaltephase können die Fahrzeugleuchten über eine Übergabetransportstreckenpartie hinweg kurzzeitig der IR-Strahlung und der Warmluft ausgesetzt sein.

Die Warmluft ist vorzugsweise auf Haltetemperatur beheizt.

Durch eine höhere Temperatur der Warmluft als der Haltetemperatur kann die Einwirkzeit verkürzt werden.

Die Warmluft kann über die transportierten Fahrzeugleuchten hinwegströmen, wodurch die Nusselt-Zahl und dadurch der Wärmeübergang von der Warmluft auf die Lichtscheibe erhöht sind, und die Einwirkzeit weiter verkürzt werden kann.

Zusätzlich kann im Anschluss an die Temperaturhaltephase eine Kühlphase vorgesehen sein, bei der die weiter transportierten Fahrzeugleuchten über eine dritte Transportstreckenpartie hinweg Kaltluft ausgesetzt werden, wobei die Länge der dritten Transportstreckenpartie von einer zur Abkühlung zumindest der Lichtscheiben der Fahrzeugleuchten beispielsweise auf eine Umgebungstemperatur von beispielsweise 20°C oder einer höheren oder niedrigeren Raumtemperatur erforderlichen Kühldauer und der Transportgeschwindigkeit sowie dem Wärmeübergang zumindest von den Lichtscheiben der Fahrzeugleuchten auf die Kaltluft abhängig ist.

Die Kaltluft kann über die transportierten Fahrzeugleuchten hinwegströmen, wodurch die Nusselt-Zahl erhöht und dadurch der Wärmeübergang sowie die Kühldauer verkürzt werden können.

Der Transport erfolgt vorzugsweise in horizontaler und/oder vertikaler Richtung.

Ein zweiter Gegenstand der Erfindung betrifft eine zur Durchführung eines zuvor beschriebenen Verfahrens geeignete, auch als Temperanlage bezeichenbaren Vorrichtung zum Tempern von Fahrzeugleuchten.

Die Vorrichtung umfasst eine Transporteinrichtung, die durch mindestens eine beispielsweise als Band-, Gliederband-, Ketten- oder Rollenförderer ausgebildete, vorzugsweise endlos umlaufenden und bevorzugt kontinuierlich oder getaktet arbeitenden Förderanlage gebildet ist. Auch eine Kombination verschiedener Förderanlagen ist denkbar. Die Transporteinrichtung verläuft entlang einer die Transportstrecke bildenden Transportbahn. Die Bahnführung der Transportbahn kann einen geraden und/oder ebenen und/oder gekrümmten und/oder Höhendifferenzen überbrückenden Verlauf aufweisen.

Die Transporteinrichtung ist so ausgebildet, dass sie Fahrzeugleuchten in einer oder mehreren nebeneinander liegenden Reihen jeweils nacheinander aneinandergereiht entlang der Transportstrecke zu transportieren in der Lage ist. Die Fahrzeugleuchten können beispielsweise auf die Transporteinrichtung aufgelegt, in die Transporteinrichtung eingehängt oder von spezifischen Fahrzeugleuchtenträgern, mit denen die Transporteinrichtung versehen sein kann, eingelegt werden. Unabhängig von der Ausbildung der Transporteinrichtung wird dies im Folgenden als Einbringen der Fahrzeugleuchten am Anfang der Transportstrecke und als Entnahme am Ende der Transportstrecke bezeichnet.

Die Transporteinrichtung verfügt über einen Antrieb, welcher bei dessen Betrieb die Transporteinrichtung beispielsweise kontinuierlich und/oder getaktet antreibt und dadurch die in die Transporteinrichtung vorzugsweise nacheinander eingebrachten Fahrzeugleuchten entlang der von der Transporteinrichtung beschriebenen Transportstrecke transportiert.

Hierdurch kann eine kontinuierliche und/oder getaktete Prozessführung sichergestellt werden.

Wichtig ist an dieser Stelle hervorzuheben, dass der getaktete Betrieb einer endlos umlaufenden Transporteinrichtung auch durch eine kontinuierlich umlaufende Förderanlage hergestellt sein kann, in welche beispielsweise speziell ausgebildete, jeweils eine oder mehrere Fahrzeugleuchten aufnehmende Fahrzeugleuchtenträger ein-und wieder ausgeklinkt werden können. Der getaktete Betrieb weist dabei den Vorteil auf, dass solche Fahrzeugleuchtenträger mit mehreren Fahrzeugleuchten befüllt und erst dann, wenn sie voll sind, in die Transportstrecke eingebracht werden. Außerdem können im getakteten Betrieb Schleusen vorgesehen sein, welche das Entweichen beispielsweise von Warmluft durch Öffnen während des Einfahrens und Schließen nach jedem Fahrzeugleuchtenträger unterbinden.

Die Vorrichtung verfügt darüber hinaus über eine Aufheizzone mit mindestens einem IR-Strahlung emittierenden IR-Strahler. Die Transportstrecke der Transporteinrichtung führt mit einer ersten Transportstreckenpartie durch die Aufheizzone hindurch.

Die Aufheizzone kann als ein Tunnel mit beispielsweise über und/oder unter und/oder ein- oder beidseits neben der ersten Transportstreckenpartie angeordnetem IR-Strahler bzw. angeordneten IR-Strahlern ausgeführt sein.

Die Vorrichtung verfügt im weiteren Verlauf der Transportstrecke im Anschluss an die Aufheizzone über eine Temperaturhaltezone mit mindestens einer Warmluftquelle. Die Transportstrecke der Transporteinrichtung führt mit einer zweiten Transportstreckenpartie durch die Temperaturhaltezone hindurch.

Die Temperaturhaltezone kann als ein Durchlaufofen mit beispielsweise über und/oder unter und/oder ein- oder beidseits neben der zweiten Transportstreckenpartie angeordneter Warmluftquelle bzw. angeordneten Warmluftquellen ausgeführt sein.

Die Aufheizzone und die Temperaturhaltezone können einander entlang einer Übergabetransportstreckenpartie ein Stück weit überlappen, um Temperaturschwankungen an den Fahrzeugleuchten beim Übergang von der Aufheizzone in die Temperaturhaltezone zu vermeiden. Die Überlappung ist jedoch zumindest so ausgebildet, dass die Fahrzeugleuchten in der Aufheizzone wenigstens über einen Teil der ersten Transportstreckenpartie hinweg ausschließlich der IR-Strahlung und in der Temperaturhaltezone mindestens über einen Teil der zweiten Transportstreckenpartie hinweg ausschließlich der Warmluft ausgesetzt sind.

Die Vorrichtung kann im weiteren Verlauf der Transportstrecke im Anschluss an die Temperaturhaltezone über eine Kühlzone mit mindestens einer Kaltluftquelle verfügen. Bei gegebenenfalls vorgesehener Kühlzone führt die Transportstrecke der Transporteinrichtung mit einer dritten Transportstreckenpartie durch die Kühlzone hindurch.

Als Kühlluftquelle eignet sich beispielsweise ein Raumluft förderndes Gebläse. Die Raumluft kann Umgebungstemperatur von beispielsweise 20°C oder wärmer oder kälter aufweisen.

Die Kühlzone kann als ein Kühltunnel mit beispielsweise über und/oder unter und/oder ein- oder beidseits neben der dritten Transportstreckenpartie angeordneter Kaltluftquelle bzw. angeordneten Kaltluftquellen ausgeführt sein.

Die Vorrichtung kann im Vorlauf der Aufheizzone über eine Beschickungszone verfügen, in der die Transportstrecke mit einer Beschickungstransportstreckenpartie beginnt und in der die Fahrzeugleuchten vereinzelt und in einer oder mehreren nebeneinander liegenden Reihen nacheinander aneinandergereiht in die Transportstrecke eingebracht werden.

Die Vorrichtung kann an ihrem Ende über eine Entladezone verfügen, in der die Transportstrecke mit einer Entladetransportstreckenpartie endet und wo die Fahrzeugleuchten nach deren Durchlaufen der anderen Zonen nacheinander der Transportstrecke entnommen werden.

Die Vorrichtung kann darüber hinaus über mindestens eine Regeleinrichtung verfügen, welche den Strahlungsfluss des mindestens einen IR-Strahlers in der Aufheizzone und/oder eine in der Temperaturhaltezone eingestellte Temperatur der Warmluft und/oder eine in der gegebenenfalls vorgesehenen Kühlzone eingestellte Temperatur der Kaltluft auf vorgebbare Werte regelt.

Eine oder mehrere Transportstreckenpartien können durch eine eigene Förderanlage gebildet sein.

Die Transportstreckenpartien können eine horizontale und/oder vertikale und/oder gerade und/oder gekrümmte Bahnführung aufweisen.

Es ist ersichtlich, dass die Erfindung durch einen direkt in einen Inline-Warmluftprozess übergehenden IR-Temperprozess verwirklicht sein kann.

Der IR-Prozess dient dabei ausschließlich der Aufheizphase, wohingegen der Warmluftprozess ausschließlich der Temperaturhaltephase dient. IR-Prozess und Warmluftprozess können einander zur Übergabe zwischen diesen Prozessen zugeordneten Bereichen überlappen.

Die Erfindung sieht demnach auch eine als Temperanlage ausgebildete Vorrichtung zur Durchführung eines zuvor beschriebenen Verfahrens mit einer Kombination eines IR-Temperprozesses mit einem Inline-Warmluftprozess vor, um die aus dem Stand der Technik bekannten Temperprozesse zu verbessern.

Der IR-Prozess und der Warmluftprozess finden bevorzugt an unterschiedlichen Orten statt, zwischen denen die dem Temperprozess zu unterziehenden Fahrzeugleuchten zu einer oder mehreren Reihen aneinandergereiht entlang einer Transportstrecke transportiert werden. Um die Übergabe zwischen den unterschiedlichen Orten frei von Wärmeverlusten für die Fahrzeugleuchten durchzuführen, kann an der Übergabestelle zwischen den beiden Orten der IR-Temperprozess und der Inline-Warmluftprozess überlappen, wobei ein Übergangsbereich existiert, an der sowohl IR-Strahlung, als auch Warmluft auf eine sich im Übergangsbereich, der im Idealfall durch eine Übergabestelle verwirklicht ist, momentan befindliche Fahrzeugleuchte einwirken kann.

So kann der Vorteil einer schnellen und bereichsweise eingeschränkten Erwärmung der Lichtscheiben von Fahrzeugleuchten in der Aufheizphase vermittels IR-Strahlung genutzt werden. In der Haltephase wird ein stabiler und vergleichsweise leicht zu kontrollierender Warmluftprozess genutzt.

Bei Produktionsunterbrechung oder Störung können die Bauteile aus der ein IR-Bestrahlungsfeld bildenden Aufheizzone herausgefahren werden und bei erneutem Anlauf wieder der IR-Strahlung ausgesetzt werden, ohne eine kritische Abnahme der Rückstrahlerwerte zu bewirken. Somit ist eine einfacher zu handhabende Prozessführung als bei einem reinen IR-Temperprozess ermöglicht.

Der Anlagenaufbau der Temperanlage kann durch die verkürzte Aufheizphase mittels IR-Strahlung relativ kurz und kompakt gewählt werden. Eine Nutzung für Folgeprojekte ist einfach durch eine flexible Anordnung der IR-Strahler gewährleistet.

Durch die im Vergleich zu Inline-Warmluftprozessen verringerte Anlagenfläche kann der Anlagenaufbau kompakt so gestaltet werden, dass ein Transport der Anlage möglich ist.

Vorteile der Erfindung ergeben sich demnach durch eine kurze Aufheizphase wegen der schnellen Aufheizung durch Infrarotstrahlung sowie durch eine gut kontrollierbare Temperaturhaltephase im stabilen Warmluftprozess. Darüber hinaus lassen sich Pausensituationen besser abbilden, als bei einem reinen IR-Temperprozess.

Ein zusätzlicher Vorteil ergibt sich durch eine Verkürzung der Einwirkzeit des Temperprozesses. So lässt sich durch das erfindungsgemäße Verfahren und vermittels der erfindungsgemäßen Vorrichtung ein Temperprozess mit besonders kurzer Einwirkzeit von beispielsweise 5 min oder dimensionslos 100% verwirklichen. Ein IR-Temperprozess nach dem Stand der Technik benötigt bei gleichen Fahrzeugleuchten doppelt (200%), ein Inline-Warmluftprozess etwa viermal (400%) so lange, ein Batchtemperprozess noch länger ((4+x)100%).

Weitere Vorteile gegenüber dem Stand der Technik ergeben sich durch eine im Vergleich zu einem Inline-Warmluftprozess geringere benötigte Anlagengröße, einhergehend mit einer verringerten benötigten Anlagenfläche. Dadurch kann der Anlagenaufbau derart kompakt gestaltet werden, dass ein Transport der Anlage möglich ist. Im Vergleich zu einem IR-Temperprozess weist die Erfindung eine vereinfachte Prozessführung auf, was sich durch verringerte Anlagekosten einhergehend mit geringeren Stückkosten der dem Temperprozess zu unterziehenden Fahrzeugleuchten bemerkbar macht.

Vorteile gegenüber dem Stand der Technik ergeben sich somit unter anderem durch:
- eine Verringerung der zur Aufstellung einer Temperanlage benötigten Anlagefläche,
- eine erhöhte Flexibilität der Temperanlage,
- eine Verbesserung der Erfüllung einer beliebigen Komplexität der Prozessführung im Produktionsprozess,
- eine Verbesserung der Flexibilität der Temperanlage in Bezug auf deren Nutzung für Folgeprojekte, sowie eine Verringerung der Anlagekosten.

Zusammengefasst wird dadurch zusätzlich zu einem das Eingangs erwähnte erstrebenswerte Ziel erfüllenden Temperprozess eine Optimierung der Randbedingungen für die Entwicklung einer Temperanlage erreicht.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: einen Längsschnitt durch eine Vorrichtung zum Tempern von Fahrzeugleuchten.
- Fig. 2: ein Ablaufdiagramm eines Verfahrens zum Tempern von Fahrzeugleuchten.

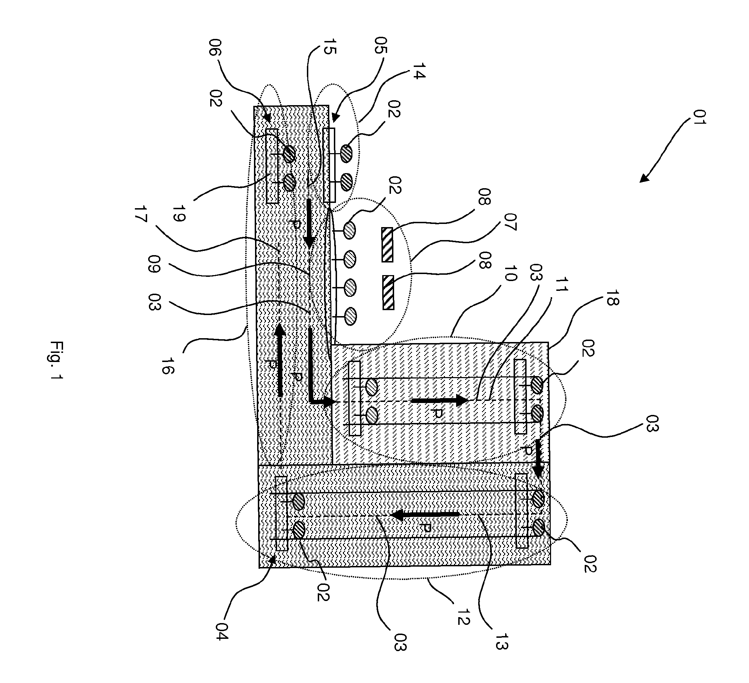

Eine in Fig. 1 dargestellte, auch als Temperanlage bezeichnete Vorrichtung 01 zum Tempern von Fahrzeugleuchten 02 umfasst eine entlang einer auch als Transportbahn bezeichneten, durch Pfeile P dargestellten Transportstrecke 03 verlaufende, vorzugsweise endlos umlaufende, angetriebene Transporteinrichtung 04.

Die Fahrzeugleuchten 02 weisen wenigstens einen von einer Lichtscheibe und einem Leuchtengehäuse umschlossenen, zumindest ein Leuchtmittel mit wenigstens einer Lichtquelle beherbergenden Leuchteninnenraum auf.

Die Fahrzeugleuchten 02 werden aneinandergereiht am Anfang 05 der Transportstrecke 03 in die Transporteinrichtung 04 eingebracht. Am Ende 06 der Transportstrecke 03 werden die Fahrzeugleuchten 02 wieder der Transporteinrichtung 04 entnommen.

Die Transporteinrichtung 04 ist dabei vorzugsweise so ausgebildet, dass sie Fahrzeugleuchten 02 in einer oder mehreren nebeneinander liegenden Reihen jeweils nacheinander aneinandergereiht entlang der Transportstrecke 03 zu transportieren in der Lage ist. Die Fahrzeugleuchten 02 können zu deren Einbringen in die Transportstrecke 03 beispielsweise auf die Transporteinrichtung 04 aufgelegt, in die Transporteinrichtung 04 eingehängt oder von spezifischen Fahrzeugleuchtenträgern 19, mit denen die Transporteinrichtung 04 versehen sein kann, eingelegt werden.

Die Fahrzeugleuchten 02 werden vorzugsweise mit ihren Lichtscheiben nach oben in die Transporteinrichtung 04 eingebracht.

Die Transporteinrichtung 04 ist vorzugsweise vermittels eines oder mehrerer Antriebsmotoren angetrieben. Diese treiben bei deren Betrieb die Transporteinrichtung 04 kontinuierlich an und transportieren dadurch in die Transporteinrichtung 04 eingebrachten Fahrzeugleuchten 02 entlang der von der Transporteinrichtung 04 beschriebenen Transportstrecke 03. Die Transporteinrichtung 04 kann durch mindestens eine als Band-, Gliederband-, Ketten- oder Rollenförderer ausgebildete Förderanlage verwirklicht sein. Auch eine Kombination verschieden ausgebildeter Förderanlagen ist denkbar. Die Bahnführung der Transportstrecke 04 kann einen geraden und/oder ebenen und/oder gekrümmten und/oder Höhendifferenzen überbrückenden Verlauf aufweisen.

Die Vorrichtung 01 verfügt außerdem über eine Aufheizzone 07 mit mindestens einem IR-Strahlung emittierenden IR-Strahler 08. Einer erste Transportstreckenpartie 09 der von der Transporteinrichtung 04 beschriebenen Transportstrecke 03 führt durch die Aufheizzone 07 hindurch.

Darüber hinaus umfasst die Vorrichtung 01 eine im weiteren Verlauf der Transportstrecke 03 im Anschluss an die Aufheizzone 07 angeordnete Temperaturhaltezone 10 mit mindestens einer Warmluftquelle. Eine zweite Transportstreckenpartie 11 der von der Transporteinrichtung 04 beschriebenen Transportstrecke 03 führt durch die Temperaturhaltezone 10 hindurch.

Die vermittels der Transporteinrichtung 04 durch die verschiedenen Zonen der Vorrichtung 01 transportierten Fahrzeugleuchten 02 sind in der Aufheizzone 07 wenigstens über einen Teil der ersten Transportstreckenpartie 09 hinweg ausschließlich der IR-Strahlung der IR-Strahler 08 ausgesetzt und in der Temperaturhaltezone 10 mindestens über einen Teil der zweiten Transportstreckenpartie 11 hinweg ausschließlich der Warmluft ausgesetzt.

Grundsätzlich ist unter Einhaltung der zuvor genannten Bedingung denkbar, dass die Aufheizzone 07 und die Temperaturhaltezone 10 einander um eine Übergabetransportstreckenpartie beispielsweise um 1 mm bis 500 mm überlappen, so dass keine Wärmeverluste und damit auch keine Temperaturschwankungen während des Temperns an den Fahrzeugleuchten 02, insbesondere deren Lichtscheiben, beim Übergang von der Aufheizzone 07 zur Temperaturhaltezone 10 auftreten.

Die Vorrichtung 01 kann im weiteren Verlauf der Transportstrecke 03 eine im Anschluss an die Temperaturhaltezone 10 angeordnete Kühlzone 12 mit mindestens einer Kaltluftquelle umfassen, durch welche Kühlzone 12 eine dritte Transportstreckenpartie 13 der von der Transporteinrichtung 04 beschriebenen Transportstrecke 03 hindurch führt.

Ferner kann eine Beschickungszone 14 im Vorlauf der Aufheizzone 07 vorgesehen sein, in der die Transportstrecke 03 mit einer Beschickungstransportstreckenpartie 15 beginnt und in der die Fahrzeugleuchten 02 vereinzelt und in einer oder mehreren nebeneinander liegenden Reihen nacheinander aneinandergereiht in die Transportstrecke 03 eingebracht werden.

Außerdem kann eine Entladezone 16 vorgesehen sein, in der die Transportstrecke 03 mit einer Entladetransportstreckenpartie 17 endet und wo die Fahrzeugleuchten 02 nach Durchlaufen der anderen Zonen und dadurch erfolgtem Tempern nacheinander der Transporteinrichtung 04 am Ende 06 der Transportstrecke 03 entnommen werden.

Wichtig ist hervorzuheben, dass die Transporteinrichtung 04 umlaufend ausgebildet sein kann, wobei der Anfang 05 und das Ende 06 der Transportstrecke 03 jeweils einen Bereich beschreiben, an dem Fahrzeugleuchten 02 in die Transporteinrichtung 04 eingebracht und entnommen werden. Die Transportstrecke 03 beschreibt damit unabhängig davon, dass die Transporteinrichtung 04 umlaufend ausgebildet sein kann, den Transportweg, welchen die Fahrzeugleuchten 02 von deren Einbringen bis zu deren Entnahme zum Tempern in der Vorrichtung 01 mit Hilfe der Transporteinrichtung 04 zurücklegen.

Einzelne oder alle Transportstreckenpartien 09, 11, 13, 15, 17 können wie am Beispiel der Transportstreckenpartien 09, 15 und 17 dargestellt als so genannte Linearsysteme ausgeführt sein und eine horizontale Bahnführung aufweisen und/oder wie am Beispiel der Transportstreckenpartien 11, 13 dargestellt als so genannte Paternostersysteme ausgeführt sein und eine vertikale Bahnführung aufweisen. Die Bahnführung kann darüber hinaus gerade oder gekrümmt verlaufen.

Die Temperaturhaltezone 10 kann als ein Durchlaufofen 18 mit beispielsweise über und/oder unter und/oder ein- oder beidseits neben der zweiten Transportstreckenpartie 11 angeordneter Warmluftquelle bzw. angeordneten Warmluftquellen ausgeführt sein.

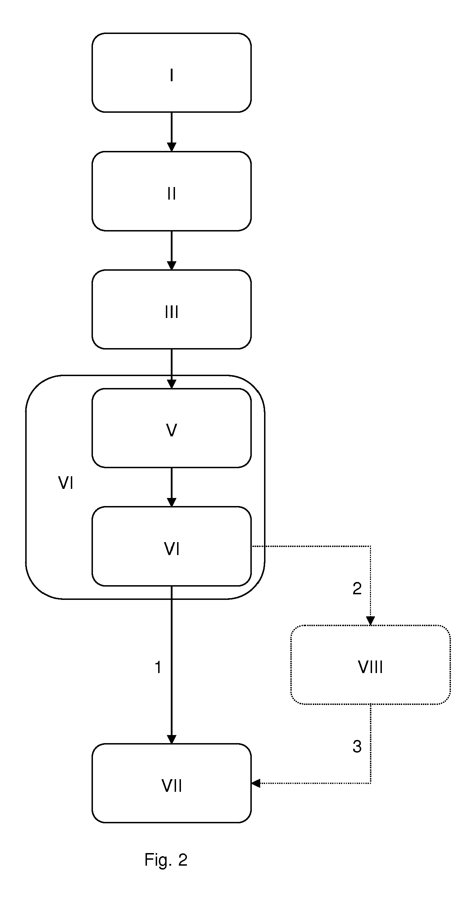

Ein in Fig. 2 in seinem Ablauf dargestelltes Verfahren zum Tempern von Fahrzeugleuchten 02 sieht in einem ersten Verfahrensschritt I eine beispielsweise in Linie zum Herstellungsprozess der Fahrzeugleuchten 02 angeordnete Zufuhr von Fahrzeugleuchten 02 zur Transportstrecke 03 vor. Grundsätzlich denkbar ist auch eine chargenweise Zufuhr, beispielsweise auf Paletten aufgestapelter Fahrzeugleuchten 02. Sofern die Fahrzeugleuchten 02 nicht einzeln nacheinander zugeführt werden, werden diese im ersten Verfahrensschritt I vereinzelt, so dass sie in einem auf den ersten Verfahrensschritt I folgenden zweiten Verfahrensschritt II beispielsweise in einer Reihe nacheinander aneinandergereiht in die Transporteinrichtung 04 am Anfang 05 der Transportstrecke 03 eingebracht werden können.

Dabei können die Fahrzeugleuchten auch in mehreren Reihen nebeneinander nacheinander aneinandergereiht in die Transportstrecke 03 eingebracht werden, so dass in dem zweiten Verfahrensschritt II beispielsweise auch zwei parallel verlaufende Reihen von nacheinander aufgereihten Fahrzeugleuchten 02 am Anfang 05 der Transportstrecke 03 in die Transporteinrichtung 04 eingebracht werden können.

Ein dritter Verfahrensschritt III sieht einen vorzugsweise kontinuierlichen und/oder getakteten Transport der in die Transporteinrichtung 04 eingebrachten Fahrzeugleuchten 02 entlang der Transportstrecke 03 vor.

Entlang der Transportstrecke 03 findet in einem vierten Verfahrensschritt IV, der sich in einen fünften Verfahrensschritt V und einen sechsten Verfahrensschritt VI gliedert, das Tempern der Fahrzeugleuchten 02 statt. Die transportierten Fahrzeugleuchten 02 durchlaufen dabei eine Aufheizphase und eine Temperaturhaltephase.

Zunächst findet dabei im fünften Verfahrensschritt V die Aufheizphase unter Aussetzen der Fahrzeugleuchten 02 einer IR-Strahlung während deren Transports über eine vorgegebene erste Transportstreckenpartie 09 hinweg statt. Die Länge der ersten Transportstreckenpartie 09 ist dabei von einer am Ende der Aufheizphase zu erreichenden Haltetemperatur, der Transportgeschwindigkeit und dem Strahlungsfluss der IR-Strahlung entlang der ersten Transportstreckenpartie 09 sowie dem Absorptionsgrad allen voran der Lichtscheiben der Fahrzeugleuchten 02 für die IR-Strahlung abhängig.

Im Anschluss daran findet im sechsten Verfahrensschritt VI die Temperaturhaltephase statt, wobei die weiter transportierten Fahrzeugleuchten 02 im Anschluss an die Aufheizphase V nacheinander den Einwirkungsbereichs der IR-Strahlung verlassen und 02 während deren Transports über eine vorgegebene zweite Transportstreckenpartie 11 hinweg Warmluft ausgesetzt sind. Die Länge der zweiten Transportstreckenpartie ist dabei von einer zur Relaxation allen voran der Lichtscheiben der Fahrzeugleuchten 02 erforderlichen Einwirkzeit und der Transportgeschwindigkeit sowie dem Wärmeübergang von der Warmluft vor allem auf die Lichtscheiben der Fahrzeugleuchten 02 abhängig.

Durch den fünften Verfahrensschritt V und den sechsten Verfahrensschritt VI ist der vierte Verfahrensschritt IV des Temperns abgeschlossen.

In einem sich an den durch den fünften Verfahrensschritt V und den sechsten Verfahrensschritt VI abgeschlossenen vierten Verfahrensschritt IV des Temperns wie durch einen Pfeil 1 angedeutet anschließenden siebten Verfahrensschritt VII schließlich findet am Ende 06 der Transportstrecke eine Entnahme der getemperten Fahrzeugleuchten 02 aus der Transporteinrichtung 04 statt, wodurch das Verfahren beendet ist.

In einem alternativ vorgesehenen, zusätzlich statt findenden achten Verfahrensschritt VIII, der wie durch gestrichelte Pfeile 2 und 3 in Fig. 2 dargestellt nach dem durch den fünften Verfahrensschritt V und den sechsten Verfahrensschritt VI abgeschlossenen vierten Verfahrensschritt IV des Temperns und vor dem siebten Verfahrensschritt VII der Entnahme der getemperten Fahrzeugleuchten 02 aus der Transporteinrichtung 04 erfolgen kann, kann vorgesehen sein, im Anschluss an den den vierten Verfahrensschritt IV abschließenden sechsten Verfahrensschritt VI und vor dem siebten Verfahrensschritt VII eine Kühlphase vorzusehen, bei der die getemperten Fahrzeugleuchten 02 während deren Transports über eine dritte Transportstreckenpartie 13 hinweg Kaltluft ausgesetzt sind. Die Länge der dritten Transportstreckenpartie 13 kann von einer zur Abkühlung zumindest der Lichtscheiben der Fahrzeugleuchten 02 vorzugsweise auf eine Umgebungstemperatur von beispielsweise 20°C oder auf eine wärmere oder kältere Raumtemperatur erforderlichen Kühldauer und der Transportgeschwindigkeit sowie dem Wärmeübergang zumindest von den Lichtscheiben der Fahrzeugleuchten 02 auf die Kaltluft abhängig sein.

Als Kaltluft eignet sich beispielsweise Raumluft, welche vorzugsweise von einem Gebläse gefördert werden kann und dabei besonders bevorzugt über die Fahrzeugleuchten 02 hinweg streicht. Die Raumluft kann Umgebungstemperatur von beispielsweise 20°C aufweisen. Die Raumluft kann jedoch auch wärmer oder kälter sein, beispielsweise entsprechend der momentanen Temperatur am Aufstellungsort der Temperanlage.

Die Erfindung ist insbesondere im Bereich der Herstellung von Fahrzeugleuchten 02 gewerblich anwendbar.

### Bezugszeichenliste

- 01: Vorrichtung
- 02: Fahrzeugleuchte
- 03: Transportstrecke
- 04: Transporteinrichtung
- 05: Anfang der Transportstrecke
- 06: Ende der Transportstrecke
- 07: Aufheizzone
- 08: IR-Strahler
- 09: erste Transportstreckenpartie
- 10: Temperaturhaltezone
- 11: zweite Transportstreckenpartie
- 12: Kühlzone
- 13: dritte Transportstreckenpartie
- 14: Beschickungszone
- 15: Beschickungstransportstreckenpartie
- 16: Entladezone
- 17: Entladetransportstreckenpartie
- 18: Durchlaufofen
- 19: Fahrzeugleuchtenträger
- P: Pfeil
- 1: Pfeil (Verfahrensverlauf)
- 2: Pfeil (Verfahrensverlauf)
- 3: Pfeil (Verfahrensverlauf)
- I: Verfahrensschritt
- II: Verfahrensschritt
- III: Verfahrensschritt
- IV: Verfahrensschritt
- V: Verfahrensschritt
- VI: Verfahrensschritt
- VII: Verfahrensschritt
- VIII: Verfahrensschritt

## Patentansprüche

1. Verfahren zum Tempern von Fahrzeugleuchten (02), welches Verfahren eine Aufheizphase (V) und eine Temperaturhaltephase (VI) umfasst, **gekennzeichnet durch** die Verfahrensschritte:
- Einbringen (II) der Fahrzeugleuchten (02) in eine Transportstrecke (03) unter Aneinanderreihung der Fahrzeugleuchten (02),
- Transport (III) der Fahrzeugleuchten (02) entlang der Transportstrecke (03),
- Tempern (IV) der Fahrzeugleuchten (02) vermittels einer:
- Aufheizphase (V) unter Aussetzen der Fahrzeugleuchten (02) einer IR-Strahlung während deren Transports über eine vorgegebene erste Transportstreckenpartie (09) hinweg,
und einer
- Temperaturhaltephase (VI), bei der die weiter transportierten Fahrzeugleuchten (02) im Anschluss an die Aufheizphase (V) nacheinander den Einwirkungsbereichs der IR-Strahlung verlassen und (02) während deren Transports über eine vorgegebene zweite Transportstreckenpartie (11) hinweg Warmluft ausgesetzt sind, sowie
- Entnahme (VII) der getemperten Fahrzeugleuchten (02) aus der Transportstrecke (03).

2. Verfahren nach Anspruch 1,
**dadurch gekennzeichnet,**
**dass** die Fahrzeugleuchten (02) beim Übergang von der Aufheizphase (V) zur Temperaturhaltephase (VI) der IR-Strahlung und der Warmluft ausgesetzt sind.

3. Verfahren nach Anspruch 1 oder 2,
**dadurch gekennzeichnet,**
**dass** die Warmluft auf Haltetemperatur beheizt ist.

4. Verfahren nach Anspruch 1 oder 2,
**dadurch gekennzeichnet,**
**dass** die Warmluft auf eine Temperatur höher als die Haltetemperatur beheizt ist.

5. Verfahren nach einem der Ansprüche 1 bis 4,
**dadurch gekennzeichnet,**
**dass** die Warmluft über die transportierten Fahrzeugleuchten (02) hinwegströmt.

6. Verfahren nach einem der vorhergehenden Ansprüche,
**dadurch gekennzeichnet,**
**dass** im Anschluss an die Temperaturhaltephase (VI) und vor der Entnahme (VII) der Fahrzeugleuchten (02) aus der Transportstrecke (03) eine Kühlphase (VIII) vorgesehen ist, bei der die Fahrzeugleuchten (02) während deren Transports über eine dritte Transportstreckenpartie (13) hinweg Kaltluft ausgesetzt sind.

7. Verfahren nach einem der vorhergehenden Ansprüche,
**dadurch gekennzeichnet,**
**dass** die Kaltluft über die transportierten Fahrzeugleuchten (02) hinwegströmt.

8. Verfahren nach einem der vorhergehenden Ansprüche,
**dadurch gekennzeichnet,**
**dass** der Transport in horizontaler und/oder vertikaler Richtung erfolgt.

9. Vorrichtung (01) zum Tempern von Fahrzeugleuchten (02), umfassend eine entlang einer Transportstrecke (03) verlaufende, angetriebene Transporteinrichtung (04), in die am Anfang (05) der Transportstrecke (03) Fahrzeugleuchten (02) aneinandergereit eingebracht und an deren Ende (06) wieder entnommen werden können,
**gekennzeichnet durch**
- eine Aufheizzone (07) mit mindestens einem IR-Strahlung emittierenden IR-Strahler (08), **durch** welche Aufheizzone (07) einer erste Transportstreckenpartie (09) der Transportstrecke (03) hindurch führt,
- eine im weiteren Verlauf der Transportstrecke (03) im Anschluss an die Aufheizzone (07) angeordnete Temperaturhaltezone (10) mit mindestens einer Warmluftquelle, **durch** welche Temperaturhaltezone (10) eine zweite Transportstreckenpartie (11) der Transportstrecke (03) hindurch führt.

10. Vorrichtung nach Anspruch 9,
**dadurch gekennzeichnet,**
**dass** die Aufheizzone (07) und die Temperaturhaltezone (10) einander überlappen, wobei die Fahrzeugleuchten (02) in der Aufheizzone (07) wenigstens über einen Teil der ersten Transportstreckenpartie (09) hinweg ausschließlich der IR-Strahlung und in der Temperaturhaltezone (10) mindestens über einen Teil der zweiten Transportstreckenpartie (11) hinweg ausschließlich der Warmluft ausgesetzt sind.

11. Vorrichtung nach Anspruch 9 oder 10,
**gekennzeichnet durch**
eine im weiteren Verlauf der Transportstrecke (03) im Anschluss an die Temperaturhaltezone (10) angeordnete Kühlzone (12) mit mindestens einer Kaltluftquelle, **durch** welche Kühlzone (12) eine dritte Transportstreckenpartie (13) der Transportstrecke (03) der Transporteinrichtung (04) hindurch führt.

12. Vorrichtung nach Anspruch 9, 10 oder 11,
**gekennzeichnet durch**
eine Beschickungszone (14) im Vorlauf der Aufheizzone (07), in der die Transportstrecke (03) mit einer Beschickungstransportstreckenpartie (15) beginnt und in der die Fahrzeugleuchten (02) eingebracht werden.

13. Vorrichtung nach einem der Ansprüche 9 bis 12,
**gekennzeichnet durch**
eine Entladezone (16), in der die Transportstrecke (03) mit einer Entladetransportstreckenpartie (17) endet und wo die Fahrzeugleuchten (02) nach erfolgtem Tempern der Transportstrecke (03) entnommen werden.

14. Vorrichtung nach einem der Ansprüche 9 bis 13,
**gekennzeichnet durch**
mindestens eine Regeleinrichtung, welche den Strahlungsfluss des mindestens einen IR-Strahlers (08) in der Aufheizzone (07) und/oder eine in der Temperaturhaltezone (10) eingestellte Temperatur der Warmluft und/oder eine in einer Kühlzone (12) eingestellte Temperatur der Kaltluft auf vorgebbare Werte regelt.

15. Vorrichtung nach einem der Ansprüche 9 bis 14,
**dadurch gekennzeichnet,**
**dass** eine oder mehrere Transportstreckenpartien (09, 11, 13, 15, 17) durch jeweils eine Förderanlage gebildet sein und/oder die Transportstreckenpartien (09, 11, 13, 15, 17) eine horizontale und/oder vertikale und/oder gerade und/oder gekrümmte Bahnführung aufweisen.

## Geänderte Patentansprüche

### Geänderte Patentansprüche gemäss Regel 137(2) EPÜ.

**1.** Verfahren zum Tempern von Fahrzeugleuchten (02), welches Verfahren eine Aufheizphase (V) und eine Temperaturhaltephase (VI) umfasst, **gekennzeichnet durch** die Verfahrensschritte:
- Einbringen (II) der Fahrzeugleuchten (02) in eine Transportstrecke (03) unter Aneinanderreihung der Fahrzeugleuchten (02),
- Transport (II der Fahrzeugleuchten (02) entlang der Transportstrecke (03),
- Tempern (IV) der Fahrzeugleuchten (02) vermittels einer:
- Aufheizphase (V) unter Aussetzen der Fahrzeugleuchten (02) einer IR-Strahlung während deren Transports über eine vorgegebene erste Transportstreckenpartie (09) hinweg,
und einer
- Temperaturhaltephase (VI), bei der die weiter transportierten Fahrzeugleuchten (02) im Anschluss an die Aufheizphase (V) nacheinander den Einwirkungsbereichs der IR-Strahlung verlassen und (02) während deren Transports über eine vorgegebene zweite Transportstreckenpartie (11) hinweg Warmluft ausgesetzt sind, die auf eine am Ende der Aufheizphase erreichte Haltetemperatur beheizt ist, sowie
- Entnahme (VII) der getemperten Fahrzeugleuchten (02) aus der Transportstrecke (03).

**2.** Verfahren nach Anspruch 1,
**dadurch gekennzeichnet,**
**dass** die Fahrzeugleuchten (02) beim Übergang von der Aufheizphase (V) zur Temperaturhaltephase (VI) der IR-Strahlung und der Warmluft ausgesetzt sind.

**3.** Verfahren nach Anspruch 1 oder 2,
**dadurch gekennzeichnet,**
**dass** die Warmluft über die transportierten Fahrzeugleuchten (02) hinwegströmt.

**4.** Verfahren nach Anspruch 1, 2 oder 3,
**dadurch gekennzeichnet,**
**dass** im Anschluss an die Temperaturhaltephase (VI) und vor der Entnahme (VII) der Fahrzeugleuchten (02) aus der Transportstrecke (03) eine Kühlphase (VIII) vorgesehen ist, bei der die Fahrzeugleuchten (02) während deren Transports über eine dritte Transportstreckenpartie (13) hinweg Kaltluft ausgesetzt sind.

**5.** Verfahren nach Anspruch 4,
**dadurch gekennzeichnet,**
**dass** die Kaltluft über die transportierten Fahrzeugleuchten (02) hinwegströmt.

**6.** Verfahren nach einem der vorhergehenden Ansprüche,
**dadurch gekennzeichnet,**
**dass** der Transport in horizontaler und/oder vertikaler Richtung erfolgt.
